# EUROPÄISCHE PATENTSCHRIFT

(11) **EP 1 282 508 B1**
(45) Veröffentlichungstag und Bekanntmachung des Hinweises auf die Patenterteilung: **26.07.2006**
(21) Anmeldenummer: 01945103.8
(22) Anmeldetag: 09.05.2001
(51) Int. Cl.: B32B 27/32

(54) **TRANSPARENTE, BIAXIAL ORIENTIERTE POLYOLEFINFOLIE MIT VERBESSERTEN HAFTEIGENSCHAFTEN**
TRANSPARENT, BIAXIALLY ORIENTATED POLYOLEFINIC FILM WITH IMPROVED BONDING PROPERTIES
FEUILLE DE POLYOLEFINE TRANSPARENTE A ORIENTATION BIAXIALE A PROPRIETES D'ADHERENCE AMELIOREES

(30) Priorität: 09.05.2000 DE 10022306
(43) Veröffentlichungstag der Anmeldung: 12.02.2003
(73) Patentinhaber: Treofan Germany GmbH & Co.KG, 66539 Neunkirchen (DE)
(72) Erfinder: BUSCH, Detlef, 66740 Saarlouis (DE); JUNG, Joachim, 66540 Neunkirchen (DE)
(86) Internationale Anmeldenummer: PCT/EP2001/005259
(87) Internationale Veröffentlichungsnummer: WO 2001/085447

(56) Entgegenhaltungen:
- WO-A-00/09596
- US-A- 5 346 763
- US-A- 5 491 023
- PATENT ABSTRACTS OF JAPAN vol. 007, no. 074 (M-203), 26. März 1983 (1983-03-26) & JP 58 001523 A (TOKUYAMA SODA KK), 6. Januar 1983 (1983-01-06)
- HABENICHT GERD: 'KLEBEN - GRUNDLAGEN, TECHNOLOGIE, ANWENDUNGEN', 1997, SPRINGER, HEIDELBERG

## Beschreibung

Die Erfindung betrifft eine Polyolefinfolie mit verbesserten Hafteigenschaften, sowie deren Verwendung.

Im Stand der Technik sind Verfahren zur Verbesserung von Hafteigenschaften von Polyolefinfolien, insbesondere Polypropylenfolien bekannt. Üblicherweise werden diese Folie während der Herstellung mittels Plasma, Flamme oder Corona auf einer oder beiden Oberflächen behandelt. Diese Verfahren erhöhen die Oberflächenspannung der Folie und verbessern beispielsweise deren Bedruckbarkeit, Metallisierbarkeit oder die Haftfestigkeit gegenüber sonstigen Beschichtungen.

Der Nachteil dieser bekannten Verfahren liegt darin, daß die erhöhte Oberflächenspannung nach der Folieherstellung kontinuierlich abfällt. Bis es zur Verarbeitung der Folie kommt ist die Oberflächenspannung häufig soweit abgesunken, daß vor der Bedruckung, Metallisierung oder anderen entsprechenden Verarbeitungsschritten eine erneute Oberflächenbehandlung erfolgen muß, um die gewünschte gute Haftfestigkeit sicherzustellen. Dabei werden durch die Nachbehandlung jedoch die ursprünglichen Werte nicht mehr erreicht. Entsprechend sind die Hafteigenschaften dieser Folien, bzw. die durch diese Verfahren erzielten Hafteigenschaften verbesserungswürdig.

Um auf anderem Wege die Haftfestigkeit zu verbessern werden Folien vor der Verarbeitung oder Bedruckung mit einem Top-Coat aus Acrylaten versehen. Diese Beschichtungen stellen zwar die gewünschten Gebrauchseigenschaften sicher, sind aber gleichzeitig mit zusätzlichen Arbeitsschritten verbunden, die aus Kostengründen für viele Einsatzbereiche wirtschaftlich nicht tragbar sind.

US 5,491,023 beschreibt eine mehrschichtige Folie, aus einer Polypropylen-Basisschicht und einer Maleinsäureanhydrid (MAH) modifizierten Polypropylen-Deckschicht. Die MAH modifizierte Polypropylen-Deckschicht ist mit einer weiteren PVOH Schicht versehen, welche als Beschichtung oder mittels Extrusion auf die Oberfläche der MAH modifizierten Deckschicht aufgebracht wird. Die Oberfläche der PVOH Schicht wird metallisiert. Es ist beschrieben, daß die Oberfläche der Haftschicht einmal mittels Corona oder Flame behandelt wird. Die Hafteigenschaften dieser Folien sind verbesserungsbedürftig.

Die Aufgabe der vorliegenden Erfindung bestand daher darin, eine Polyolefinfolie zur Verfügung zu stellen, welche sich durch besonders gute Hafteigenschaften auszeichnen soll. Dabei ist insbesondere eine gute Haftfestigkeit gegenüber Druckfarben auf wäßriger Basis besonders wünschenswert. Die Folie soll wirtschaftlich und kostengünstig herstellbar sein. Die übrigen geforderten Gebrauchseigenschaften der Folie dürfen dabei nicht beeinträchtigt werden.

Diese Aufgabe wird gelöst durch die Verwendung einer Polypropylenfolie aus einer Basisschicht, welche aus Propylenpolymeren aufgebaut ist und mindestens einer äußeren Haftschicht, wobei diese Haftschicht mindestens 50 Gew.-% bezogen auf das Gewicht der Haftschicht eines Maleinsäureanhydrid modifizierten Propylenhomopolmyer, Propylencopolymer oder Propylenterpolymer enthält, zur Bedruckung, Metallisierung oder Beschichtung auf der Oberfläche der Haftschicht, wobei die Haftschicht während der Herstellung der mittels Plasma, Corona oder Flamme oberflächenbehandelt wird und vor der Bedruckung, Metallisierung oder Beschichtung eine weitere Oberflächenbehandlung der Haftschicht mittels Plasma-, Corona- oder Flamme erfolgt.

Diese Aufgabe wird des weiteren durch ein Verfahren zur Verbesserung der Haftfähigkeit einer Folienoberfläche gelöst. Nach diesem Verfahren wird eine Haftschicht als äußere Schicht aufgebracht, vorzugsweise mittels Coextrusion, wobei diese Haftschicht mindesten 50 Gew.-% eines mit Maleinsäureanhydrid modifizierten Propylenpolymeren enthält und die Oberfläche dieser Haftschicht während der Folienherstellung ein erstes Mal mittels Corona, Plasma-, oder Flamme behandelt wird und die Oberfläche der Haftschicht vor ihrer Bedruckung, Beschichtung oder Metallisierung ein zweites mal derart mit Corona, Plasma-, oder Flamme behandelt wird, daß der gleiche Wert für die Oberflächenspannung erzielt wird, den die Folie unmittelbar nach ihrer Herstellung aufwies.
Die Unteransprüche geben bevorzugte Ausführungsformen der Erfindung an.

Erfindungsgemäß umfaßt die Folie mindestens eine Basisschicht und eine Haftschicht, welche eine äußere Schicht der Folie bildet. Im allgemeinen ist die Haftschicht auf einer Oberfläche der Basisschicht aufgebracht. Gegebenenfalls kann auf der gegenüberliegenden Oberfläche der Basisschicht eine weitere, beliebige Deckschicht aufgebracht sein. Auf diese Weise erhält man dreischichtige Ausführungsformen mit einer Haftschicht als Deckschicht. Gegebenenfalls können diese dreischichtigen Ausführungsformen durch zusätzliche Zwischenschichten zwischen der Basisschicht und den äußeren Deckschichten modifiziert werden. Auf diese Weise erhält man vier- und fünfschichtige Ausführungsformen der erfindungsgemäßen Folie. Allen Ausführungsformen ist das erfindungswesentliche Merkmal gemeinsam, daß die Haftschicht mindestens eine äußere Schicht der Folie bildet.

Diese Haftschicht der Folie enthält im allgemeinen mindestens 50 Gew.-%, vorzugsweise 70 bis 100 Gew.-%, insbesondere 80 bis <100 Gew.-%, jeweils bezogen auf die Schicht, eines Maleinsäureanhydrid modifizierten Polyolefins, nachstehen MAPO genannt. Neben dem MAPO können weitere Bestandteile der Haftschicht polyolefinische Polymere sein, welche aus Ethylen, Propylen oder Butyleneinheiten aufgebaut sind. Diese Polyolefine sind in einer Menge von 0 bis 50 Gew.-%, vorzugsweise 0 bis 30 Gew.-%, insbesondere >0 bis 20 Gew.-%, jeweils bezogen auf die Haftschicht, enthalten. Zwecks klarer Unterscheidung von den modifizierten Polyolefinen werden diese als Mischungskomponente zusätzlich in der Haftschicht enthaltenen Polyolefine, die nicht modifiziert sind, nachstehend als Polyolefin II bezeichnet. Gegebenenfalls enthält die Haftschicht zusätzlich übliche Additive in jeweils wirksamen Mengen.

Polyolefine II sind beispielsweise Polyethylene, Polypropylene, Polybutylene oder Mischpolymerisate auf Olefinen mit zwei bis acht C-Atomen, worunter Polyethylene und Polyproyplene bevorzugt sind. Polypropylene sind Homopolymere aus Propyleneinheiten oder Mischpolymerisate, wie Co- oder Terpolymere, welche überwiegend aus Propyleneinheiten aufgebaut sind, sie enthalten im allgemeinen mindestens 50 Gew.-%, vorzugsweise 70 bis 99 Gew.-% Propyleneinheiten, bezogen auf das Propylenmischpolymerisat.

Im allgemeinen enthält das Propylenpolymer mindestens 90 Gew.-%, vorzugsweise 94 bis 100 Gew.-%, insbesondere 98 bis 100 Gew.-%, Propyleneinheiten. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen und Butylen. Die Angaben in Gew.-% beziehen sich jeweils auf das Propylenhomopolymere.

Gegebenenfalls können als Polyolefin II isotaktische Propylenhomopolymere mit einem Schmelzpunkt von 140 bis 170 °C, vorzugsweise von 155 bis 165 °C, und einen Schmelzflußindex (Messung DIN 53 735 bei 21,6 N Belastung und 230 °C) von 1,0 bis 10 g/10 min, vorzugsweise von 1,5 bis 6,5 g/10 min eingesetzt werden. Der n-heptanlösliche Anteil der isotaktischen Propylenhomopolymeren beträgt im allgemeinen 1 bis 10 Gew.-%, vorzugsweise 2-5 Gew.-% bezogen auf das Ausgangspolymere.

Bevorzugt werden zusammen mit dem MAPO als Polyolefine II Co-oder Terpolymere in der Haftschicht eingesetzt, vorzugsweise Copolymere von Ethylen und Propylen oder Ethylen und Butylen oder Propylen und Butylen oder Terpolymere von Ethylen und Propylen und Butylen oder Mischungen aus zwei oder mehreren der genannten Co- und Terpolymeren.

Insbesondere sind als Polyolefin II statistische Ethylen-Propylen-Copolymere mit einem Ethylengehalt von 1 bis 10 Gew.-% oder statistische Propylen-Butylen-1-Copolymere mit einem Butylengehalt von 2 bis 25 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, und einem Butylen-1-Gehalt von 2 bis 20 Gew%, jeweils bezogen auf das Gesamtgewicht des Terpolymeren, oder ein Blend aus Ethylen-Propylen-Butylen-1-Terpolymeren und Propylen-Butylen-1-Copolymeren, wobei das Blend einen Ethylengehalt von 0,1 bis 7 Gew.-%, eine Propylengehalt von 50 bis 90 Gew.-% und einem Butylen-1-Gehalt von 10 bis 40 Gew.-%, jeweils bezogen auf das Gesamtgewicht des Polymerblends, aufweist.

Die in der oder den Haftschicht eingesetzten vorstehend beschriebenen Co- und/oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230 °C und einer Kraft von 21,6 N (DIN 53 735) gemessen.

Die Molekulargewichtsverteilung der vorstehend beschriebenen Polyolefine II kann je nach Anwendungsgebiet in breiten Grenzen variieren. Das Verhältnis des Gewichtsmittels M_{w} zum Zahlenmittel Mₙ liegt im allgemeinen zwischen 1 und 15, vorzugsweise im Bereich von 2 bis 10. Eine derartig Molekulargewichtsverteilung - erreicht man beispielsweise durch peroxidischen Abbau oder durch Herstellung des Polyolefins mittels geeigneter Metallocenkatalysatoren.

Maleinsäure modifizierte Polyolefine sind Polyolefine, die durch den Einbau von Maleinsäureeinheiten hydrophilisiert werden. Diese modifizierten Polyolefine sind im Stand der Technik an sich bekannt und werden auch als gecrafted Polymere bezeichnet. Die Modifizierung erfolgt durch Umsetzung der Polyolefine mit Maleinsäureanhydrid durch geeignete Verarbeitungsschritte. Auch diese Verfahren sind an sich im Stand der Technik bekannt.

Als Basispolyolefine für die Umsetzung mit Maleinsäureanhydrid können grundsätzlich die vorstehend beschriebenen Polyolefine II verwendet werden, wobei für die Zwecke der vorliegenden Erfindung Propylenhomopolymere oder Propylencopolymere oder Propylenterpolymere, welche überwiegend aus Propyleneinheiten aufgebaut sind, im allgemeinen aus mindestens 50 Gew.-%, vorzugsweise 70 bis 99 Gew.-% Propyleneinheiten, bezogen auf das Propylenmischpolymerisat, als Basispolymere für die Modifizierung bevorzugt sind. Die Herstellung dieser Maleinsäureanhydrid modifizierte Polypropylene ist an sich im Stand der Technik bekannt und beispielsweise im US Patent 3,433,777 und US Patent 4,198,327 beschrieben.

Die Dichte nach ASTM D 1505 der modifizierten Polyolefine, vorzugsweise modifizierten Propylenpolymeren liegt vorzugsweise in einem Bereich von 0,89 bis 0,92, insbesondere 0,9, der Vicat-Erweichungspunkt nach ASTM 1525 liegt in einem Bereich von 120 bis 150°C, insbesondere 140 bis 145°C, die Shore-Härte nach ASTM 2240 beträgt 55 bis 70, vorzugsweise 67°C und der Schmelzpunkt nach ASTM D 2117 liegt in einem Bereich von 140 bis 165°C, vorzugsweise 150 bis 165°C, insbesondere 155 bis 160°C. Der Maleinsäureanteil im modifizierten Polyolefin, vozugsweise Propylenpolymer liegt im allgemeinen unter 5% bezogen auf das modifizierte Polyolefin, vorzugsweise im Bereich von 0,05 bis 3 %, insbesondere 0,1 bis 1%. Der Schmelzflußindex beträgt im allgemeinen 1 bis 20g/10min, vorzugsweise 3 bis 10g/10min.

Bevorzugt werden zur Modifizierung mit Maleinsäureanhydrid die folgenden Propytenpolymeren eingesetzt:

Isotaktische Propylenhomopolymere mit einem Schmelzpunkt von 140 bis 170°C, vorzugsweise von 155 bis 165 °C, und einen Schmelzflußindex (Messung DIN 53 735 bei 21,6 N Belastung und 230 °C) von 1,0 bis 10 g/10 min, vorzugsweise von 1,5 bis 6,5 g/10 min eingesetzt werden. Der n-heptanlösliche Anteil der isotaktischen Propylenhomopolymeren beträgt im allgemeinen 1 bis 10 Gew.%, vorzugsweise 2-5 Gew.-% bezogen auf das Ausgangspolymere.

Copolymere von Ethylen und Propylen oder Propylen und Butylen oder Terpolymere von Ethylen und Propylen und Butylen oder Mischungen aus zwei oder mehreren der genannten Co- und Terpolymeren.

Insbesondere sind statistische Ethylen-Propylen-Copolymere mit einem Ethylengehalt von 1 bis 10 Gew.-% oder statistische Propylen-Butylen-1-Copolymere mit einem Butylengehalt von 2 bis 25 Gew.%, jeweils bezogen auf das Gesamtgewicht des Copolymeren, oder statistische Ethylen-Propylen-Butylen-1-Terpolymere mit einem Ethylengehalt von 1 bis 10 Gew.-%, und einem Butylen-1-Gehalt von 2 bis 20 Gew%, jeweils bezogen auf das Gesamtgewicht des Terpolymeren, oder ein Blend aus Ethylen-Propylen-Butylen-1-Terpolymeren und Propylen-Butylen-1-Copolymeren, wobei das Blend einen Ethylengehalt von 0,1 bis 7 Gew.-%, eine Propylengehalt von 50 bis 90 Gew.-% und einem Butylen-1-Gehalt von 10 bis 40 Gew.-%, jeweils bezogen auf das Gesamtgewicht des Polymerblends, aufweist, bevorzugt.

Die vorstehend beschriebenen zur Modifizierung eingesetzten Co- und/oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230 °C und einer Kraft von 21,6 N (DIN 53 735) gemessen.

Die Haftschicht kann gegebenenfalls zusätzlich übliche Additive wie Neutralisationsmittel, Stabilisatoren, Antistatika, Antiblockmittel und/oder Gleitmittel in jeweils wirksamen Mengen enthalten.

Es wurde gefunden, daß sich die Oberfläche der Haftschicht sehr gut für eine Oberflächenbehandlung mittels Plasma-, Flamme oder Corona eignet. Die erzielten Werte für die Oberflächenspannungen sind hoch, vorzugsweise im Bereich von 37 bis 50 mN/m, insbesondere 39 bis 45 mN/m. Überraschenderweise können die bei der in-line Behandlung erzielten Werte wieder erreicht werden, wenn die Folie unmittelbar vor dem jeweiligen Verarbeitungsschritt erneut oberflächenbehandelt wird. Im Ergebnis zeigt die Folie auf Grund der Haftschicht eine verbesserte Haftung gegenüber Druckfarben und Beschichtungen, und läßt sich ebenfalls sehr gut für Metallisierungen mittels Vakuumbedampfungen einsetzten.

Die Basisschicht der Polyolefinfolie ist grundsätzlich aus den vorstehend beschriebenen Polyolefinen aufgebaut, worunter die beschriebenen Propylenhomopolymere bevorzugt sind, insbesondere isotaktische Propylenhomopolymere. Im allgemeinen enthält die Basisschicht mindestens 70 bis 100, vorzugsweise 80 bis <100Gew.-% Polyolefin bzw. Propylenpolymer. Des weiteren sind in der Basisschicht üblicherweise Neutralisationsmittel und Stabilisatoren, sowie gegebenenfalls weiter übliche Additive in jeweils wirksamen Mengen. Für opake oder weiß-opake Ausführungsformen der Folie enthält die Basisschicht zusätzlich vakuoleninitiierende Füllstoffe und/oder Pigmente. Art und Menge der Füllstoffe sind im Stand der Technik bekannt.

Die Dicke der Haftschicht aus modifizietem Polyolefin ist größer als 0,1 µm und liegt vorzugsweise im Bereich von 0,3 bis 3 µm, insbesondere 0,4 bis 1,5 µm.

Gegebenenfalls kann die Folie weitere Schichten, vorzugsweise eine zweite Deckschicht, sowie gegebenenfalls einseitig oder beidseitig Zwischenschichten aufweisen.

Die Zwischenschicht/en kann/können aus den für die Basisschicht beschriebenen α-Polyolefinen bestehen und gegebenenfalls üblichen Additive wie Antistatika, Neutralisationsmittel, Gleitmittel und/oder Stabilisatoren, sowie gegebenenfalls Antiblockmittel, enthalten. Die Dicke der Zwischenschicht/en, wenn vorhanden, ist größer als 0,3 µm und liegt vorzugsweise im Bereich von 1,0 bis 15 µm, insbesondere 1,5 bis 10 µm.

Die Gesamtdicke der erfindungsgemäßen Polyolefinfolie kann innerhalb weiter Grenzen variieren und richtet sich nach dem beabsichtigten Einsatz. Sie beträgt vorzugsweise 4 bis 60 µm, insbesondere 5 bis 50 µm, vorzugsweise 10 bis 35 µm, wobei die Schicht etwa 40 bis 100 % der Gesamtfoliendicke ausmacht.

Die Erfindung betrifft weiterhin ein Verfahren zur Herstellung der erfindungsgemäßen Polyolefinfolie nach dem an sich bekannten Coextrusionsverfahren.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend gestreckt (orientiert), die gestreckte Folie thermofixiert und gegebenenfalls an der zur Behandlung vorgesehenen Oberflächenschicht corona- oder flammbehandelt wird.

Eine biaxiale Streckung (Orientierung) wird sequentiell oder simultan durchgeführt. Die sequentielle Streckung wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Die Simultane Streckung kann im Flachfolienverfahren oder im Blasverfahren ausgeführt werden. Die weitere Beschreibung der Folienherstellung erfolgt am Beispiel einer Flachfolienextrusion mit anschließender sequentialer Streckung.

Zunächst wird wie beim Extrusionsverfahren üblich das Polymere bzw. die Polymermischung der einzelnen Schichten in einem Extruder komprimiert und verflüssigt, wobei die Laserpigmente und andere gegebenenfalls zugesetzte Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellauferider Walzen durchführen und das Querstrecken mit Hilfe eines entsprechenden Kluppenrahmens. Die Längsstrekungsverhältnisse liegen im Bereich von 4 bis 8 vorzugsweise 5 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160°C gehalten wird. Anschließend wird die Folie in üblicher Weise mit einer Aufwickeleinrichtung aufgewickelt.

Es hat sich als besonders günstig erwiesen, die Abzugswalze oder walzen, durch die die ausgepreßte Folie abgekühlt und verfestigt wird, durch einen Heiz- und Kühlkreislauf bei einer Temperatur von 10 bis 100 °C, vorzugsweise 20 bis 50°C, zu halten.

Die Temperaturen, bei denen Längs- und Querstreckung durchgeführt werden, können in einem relativ großen Bereich variieren und richten sich nach den gewünschten Eigenschaften der Folie. Im allgemeinen wird die Längsstreckung vorzugsweise bei 80 bis 150 °C und die Querstreckung vorzugsweise bei 120 bis 170 °C durchgeführt.

Bevorzugt wird/werden nach der biaxialen Streckung eine oder beide Oberfläche/n der Folie nach einer der bekannten Methoden corona- oder flammbehandelt. Die Behandlungsintensität liegt im allgemeinen im Bereich von 37 bis 50 mN/m, vorzugsweise 39 bis 45 mN/m.

Die Oberflächenbehandlung der Folie wird hier am Beispiel der Coronabehandlung beschrieben.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Die Coronabehandlung erfolgt vorzugsweise in-line, d.h. während der Herstellung der Folie. Es wurde gefunden, daß die Folie erfindungsgemäß hervorragend für eine weitere off-line Behandlung geeignet ist, welche vorzugsweise kurz vor Bedruckung, Metallisierung oder Weiterverarbeitung der Folie angewendet wird. Es wurde gefunden, daß durch eine derartige Plasma-, Corona- oder Flammbehandlung sehr hohe Werte für die Oberflächenspannung erzielen lasse, die nahe an die ursprünglichen, durch in-line Behandlung erzielte Werte heranreichen. Die Folie ist daher zur Weiterverarbeitung besonders geeignet.

Die Erfindung wird nun anhand eines Ausführungsbeispiel erläutert:

### Beispiel 1

Es wurde durch Coextrusion und anschließende stufenweise Orientierung in Längs- und Querrichtung eine transparente dreischichtige Folie bestehend aus der Basisschicht b, einer ersten Deckschicht A und einer zweiten Deckschicht C mit einer Gesamtdicke von 60 µm hergestellt. Die erste Deckschicht A hatte eine Dicke von 1,0 µm und die zweite Deckschicht C eine Dicke von 0,7 µm. Die Schichten waren wie folgt zusammengesetzt:
Basisschicht C:
   - 99,64 Gew.-%: Propylenhomopolymer mit einem Schmelzpunkt von 165 °C und einem Schmelzflußindex von 3,4g/10min und einem Kettenisotaxie-Index von 94 %
   - 0,10 Gew.-%: Erucasäureamid (Gleitmittel)
   - 0,10 Gew.-%: Armostat 300 (Antistatikum)
   - 0,03 Gew.-%: Neutralisationsmittel (CaCO3)
   - 0,13 Gew.-%: Stabilisator (Irganox)
Deckschicht A:
   - 99,5 Gew.-%: Maleinsäureanhydrid modifiziertes Polypropylen (Polybond)
   - 0,5 Gew.-%: SiO2 als Antiblockmittel mit einer mittleren Teilchengröße von 4 µm
Deckschicht C:
   - 99,54 Gew.-%: statistisches Copolymer aus Ethylen und Propylen mit einem Schmelzflußindex von 6,0g/10min und einem Ethylengehalt von 6 Gew.-% bezogen auf das Copolymer
   - 0,22 Gew.-%: SiO2 als Antiblockmittel mit einer mittleren Teilchengröße von 4 µm
   - 0,20 Gew.-%: Stabilisator (Irganox 1010 / Irgafos 168)
   - 0,04 Gew.-%: Neutralisationsmittel (CaStearat)

Die Herstellungsbedingungen in den einzelnen Verfahrensschritten waren:

| | | |
|---|---|---|
| Extrusion: | Temperaturen Basisschicht B: | 260 °C |
| | Deckschicht A: | 230 °C |
| | Deckschicht C: | 240°C |
| | Temperatur der Abzugswalze: | 20 °C |
| Längsstreckung: | Temperatur: | 100°C |
| | Längsstreckverhältnis: | 1 : 4,5 |
| Querstreckung: | Temperatur: | 165°C |
| | Querstreckverhältnis: | 1 : 9 |
| Fixierung: | Temperatur: | 140°C |
| | Konvergenz: | 10 % |
| Druckvorbehandlung | Deckschicht A | Corona 10000V / 10000Hz |
| | Deckschicht C | Corona 10000V / 10000Hz |

Bei dem Querstreckverhältnis von 1:9 handelt es sich um einen Effektivwert. Dieser Effektivwert berechnet sich aus der Endfolienbreite B, reduziert um die zweifache Säumstreifenbreite b, dividiert durch die Breite der längsgestreckten Folie C, ebenfalls um die zweifache Säumstreifenbreite b reduziert.

Die Folie wies unmittelbar nach der In-Line Coronabehandlung eine Oberflächespannung von 42 mN/m auf der Oberfläche der Deckschicht A auf, welche im Laufe der Lagerzeit auf niedrigere Werte abfiel. Mittels einer off-line Corona nach einer Lagerzeit von 6 Woche wurde erneut eine Oberflächenspannung von 42 mN/m erreicht. Bei der anschließenden Bedruckung mittels wäßriger Druckfarben zeigte die Folie eine sehr gute Druckfarbenhaftung.

### Vergleichsbeispiel

Es wurde eine Folie wie in Beispiel 1 beschrieben hergestellt. Im Unterschied zu Beispiel 1 wurde die Deckschicht nicht aus einem modifizierten Polypropylen hergestellt. Die Deckschicht A hatte jetzt die gleiche Zusammensetzung wie die Deckschicht C des Beispiel 1.

Mittels in-line Coronabehandlung konnte eine Oberflächenspannung von 41 mN/m auf der Oberfläche der Deckschicht A erreicht werden. Bei dem Versuch die Coronabehandlung nach 6 Wochen aufzufrischen wurde lediglich eine Oberflächenspannung von 38 mN/m erreicht. Bei der anschließenden Bedruckung mittels wässriger Druckfarben zeigte die Folie eine mangelhafte Haftung gegenüber den Druckfarben.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Schmelzpunkt

DSC-Messung, Maximum der Schmelzkurve, Aufheizgeschwindigkeit 20 °C/min.

### Oberflächenspannung

Die Oberflächenspannung wurde mittels der sogenannten Tintenmethode (DIN 53 364) bestimmt.

### Bedruckbarkeit

Die coronabehandelten Folien wurden bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

## Patentansprüche

1. Verwendung einer Polypropylenfolie aus einer Basisschicht, welche aus Propylenpolymeren aufgebaut ist, und mindestens einer äußeren Haftschicht, wobei diese Haftschicht mindestens 50 Gew.-% bezogen auf das Gewicht der Haftschicht eines Maleinsäureanhydrid modifizierten Propylenhomopolmyer, Propylencopolymer oder Propylenterpolymer enthält, zur Bedruckung, Metallisierung oder Beschichtung auf der Oberfläche der Haftschicht, **dadurch gekennzeichnet, daß** die Haftschicht während der Herstellung mittels Plasma, Corona oder Flamme oberflächenbehandelt wird und vor der Bedruckung, Metallisierung oder Beschichtung eine weitere Oberflächenbehandlung der Haftschicht mittels Plasma, Corona oder Flamme erfolgt, bei der der gleiche Weit für die Oberflächenspannung erzielt wird, den die Folie unmittelbar nach ihrer Herstellung aufwies.

2. Verwendung nach Anspruch 1, **dadurch gekennzeichnet, daß** die Bedruckung mittels Druckfarben auf wäßriger Basis erfolgt.

3. Verwendung nach Anspruch 1 oder 2, **dadurch gekennzeichnet, daß** die Haftschicht der Folie zusätzlich ein nicht modifiziertes Polyolefin, vorzugsweise Propylenpolymere, Propylen-Co- und/oder Terpolymer, enthält.

4. Verwendung nach Anspruch 3, **dadurch gekennzeichnet, daß** das nicht modifizierte Polyolefin ein Propylenpolymer ist.

5. Verwendung nach Anspruch 4, **dadurch gekennzeichnet, daß** das nicht modifiziertes Propylenpolymer ein Propylen-Co- und/oder Terpolymer, ist.

6. Verwendung nach einem der Ansprüche 1 bis 5, **dadurch gekennzeichnet, daß** die Metallisierung mittels Vakuumbedampfung erfolgt.

7. Verfahren zur Verbesserung der Haftfähigkeit einer Folienoberfläche, **dadurch gekennzeichnet, daß** man eine Haftschicht als äußere Schicht aufbringt, vorzugsweise mittels Coextrusion, und diese Haftschicht mindesten 50 Gew.-% eines mit Maleinsäureanhydrid modifizierten Propylenpolymeren enthält und die Oberfläche dieser Haftschicht während der Folienherstellung ein erstes Mal mittels Corona, Plasma, oder Flamme behandelt wird und die Oberfläche der Haftschicht vor ihrer Bedruckung, Beschichtung oder Metallisierung ein zweites mal derart mit Corona, Plasma, oder Flamme behandeft wird, daß der gleiche Wert für die Oberflächenspannung erzielt wird, den die Folie unmittelbar nach ihrer Herstellung aufwies.

## Claims

1. Use of a polypropylene film comprising a base layer made from propylene polymers and at least one outer adhesive layer, said adhesive layer comprising at least 50% by weight, based on the weight of the adhesive layer, of a maleic anhydride-modified propylene homopolymer, propylene copolymer or propylene terpolymer, for printing, metallization or coating on the surface of said adhesive layer, **characterised in that** said adhesive layer is treated by plasma, corona or flame on its surface during production of the film and prior to printing, metallization or coating said adhesive layer is treated again by plasma, corona or flame on its surface, such that the same surface tension value that the film immediately had after production is achieved.

2. Use according to Claim 1, **characterized in that** the printing is carried out by means of water-based printing inks.

3. Use according to Claim 1, 2, 3 or 4, **characterized in that** the adhesive layer of the film additionally comprises a non-modified polyolefin, preferably propylene copolymer and/or terpolymer.

4. Use according to Claim 1, **characterized in that** the non-modified polyolefin is a propylene polymer.

5. Use according to Claim 1, 2, 3 or 4, **characterized in that** the non-modified polyolefin is a propylene copolymer and/or terpolymer.

6. Use according to Claim 3, **characterized in that** the metallization is carried out by means of vacuum vapour deposition.

7. Process for improving the adhesion of a film surface, **characterized in that** an adhesive layer is applied as an outer layer, preferably by coextrusion, and this adhesive layer comprises at least 50% by weight of a maleic anhydride-modified propylene polymer, and the surface of this adhesive layer is corona, plasma or flame-treated a first time during film production, and said surface of the adhesive layer, before printing, coating or metallization thereof, is corona, plasma or flame-treated a second time in such a way that the same value for the surface tension is achieved that the film had immediately after its production.

## Revendications

1. Utilisation d'un film de polypropolène composé d'une couche de base qui est réalisée à partir de polymères de propylène et d'au moins une couche adhésive extérieure, cette couche adhésive contenant au moins 50 % en poids, par rapport au poids de la couche adhésive, d'homopolymère de propylène, de copolymère de propylène ou terpolymère de propylène modifié à l'anhydre d'acide malique pour l'impression, la métallisation ou le revêtement de la surface de la couche adhésive, **caractérisée en ce que** la couche adhésive est traitée en surface pendant la fabrication au plasma, au corona ou à la flamme et qu'avant l'impression, la métallisation ou le revêtement, il y a un autre traitement de surface de la couche adhésive au plasma, au corona ou à la flamme, lors duquel on atteint pour la tension surfacique la même valeur que celle que présentait film directement après sa fabrication.

2. Utilisation selon la revendication 1, **caractérisée en ce que** l'impression est réalisée au moyen d'encres d'impression à base aqueuse.

3. Utilisation selon la revendication 1 ou 2, **caractérisée en ce que** la couche adhésive du film contient en outre une polyoléfine non modifiée, de préférence du polymère de propylène, du co- et/ou terpolymère de propylène.

4. Utilisation selon la revendication 3, **caractérisée en ce que** la polyoléfine non modifiée est un polymère de propylène.

5. Utilisation selon la revendication 4, **caractérisée en ce que** le polymère de propylène non modifié est un co- et/ou terpolymère de propylène.

6. Utilisation selon une des revendications 1 à 5, **caractérisée en ce que** la métallisation est faite par vaporisation sous vide.

7. Procédé d'amélioration de l'adhésivité d'une surface de film, **caractérisé en ce qu'**on applique une couche adhésive comme couche extérieure, de préférence par coextrusion, et que cette couche adhésive contient au moins 50 % en poids d'un polymère de propylène modifié à l'anhydre d'acide malique et que la surface de cette couche adhésive est traitée pendant la fabrication du film une première fois au corona, au plasma ou à la flamme et que la surface de la couche adhésive, avant son impression, son revêtement ou sa métallisation, est traitée une deuxième fois au corona, au plasma ou à la flamme de manière à obtenir pour la tension surfacique la même valeur que celle que présentait le film juste après sa fabrication.
